**Europäisches Patentamt**

**European Patent Office**

**Office européen des brevets**

(19)

(11) Veröffentlichungsnummer: **0 158 737**
**B1**

(12) # EUROPÄISCHE PATENTSCHRIFT

(45) Veröffentlichungstag der Patentschrift:
08.03.89

(51) Int. Cl.⁴: **H 01 G 4/22**

(21) Anmeldenummer: 84116235.7

(22) Anmeldetag: 22.12.84

(54) Elektrischer Kondensator mit einem Löschgas-Zusatz.

(30) Priorität: 30.03.84 DE 3411793

(43) Veröffentlichungstag der Anmeldung:
23.10.85 Patentblatt 85/43

(45) Bekanntmachung des Hinweises auf die Patenterteilung:
08.03.89 Patentblatt 89/10

(84) Benannte Vertragsstaaten:
DE FR GB IT

(56) Entgegenhaltungen:
GB-A-2 064 798

ANNUAL REPORT OF THE NATIONAL ACADEMY
OF SCIENCES, NATIONAL RESEARCH COUNCIL,
1962, Seiten 73-77, Washington, US; B.J. EISEMAN,
JR.: "Additives for the self-extinguishment of
corona in gases"

(73) Patentinhaber: ROBERT BOSCH GMBH, Postfach
50, D-7000 Stuttgart 1 (DE)

(72) Erfinder: Handtmann, Dieter, Dr., Dipl.- Phys.,
Wilhelm- Haspel- Strasse 49, D-7032 Sindelfingen
(DE)
Erfinder: Moosbrugger, Egon, Dipl.- Phys.,
Landhausstrasse 114, D-7000 Stuttgart 1 (DE)
Erfinder: Förster, Herbert, Dipl.- Phys.,
Grundackerweg 28, 7060 Schorndorf (DE)

**Beschreibung**

**Stand der Technik**

Die Erfindung geht aus von einem elektrischen Kondensator nach der Gattung des Hauptanspruches, wie er beispielsweise aus der DE-OS-2 704 458 bekanntgeworden ist. Dort ist ein elektrischer Kondensator beschrieben, dessen Wickel imprägniert ist mit einer Grundflüssigkeit und mit einem Gemisch von zwei Additiven, wovon eines aus einer kondensatorverträglichen halogenierten Flüssigkeit auf der Grundlage von Toluol oder anderen besteht und einen hohen Druck elektronegativen Dampfes aufweist. Derartige elektronegative Gaszusätze sind in der Lage, Elektronen zu absorbieren und hierdurch eine Löschwirkung zu erbringen. Elektronegative Gase haben jedoch keine Wirkung auf positive Ionen.

Eine ähnliche Kondensatoranordnung ist bekannt aus der GB-PS-2 084 798, welche einen elektrischen Kondensator beschreibt aus metallisierten Polypropylenfilmen, wobei der Wickel ebenfalls mit elektronegativem Gas oder mit Mischungen aus elektronegativem Gas und Luft und/oder Stickstoff imprägniert ist. Das Einbringen des Zusatzstoffes erfolgt mit dem Füllöl, welches mit dem gasförmigen Zusatzstoff gesättigt ist.

**Vorteile der Erfindung**

Der erfindungsgemäße Kondensator mit den kennzeichnenden Merkmalen des Hauptanspruches hat demgegenüber den Vorteil, daß Ionisationsvorgange und elektrische Durchschläge wirksam behindert werden, so daß sogenannte Durchschlagsnester im Wickel nicht mehr auftreten und der hierdurch bedingte Kapazitätsverlust weitestgehend vermieden wird. Dies wird erreicht einerseits durch das Absorbieren von ultravioletten Photonen, wodurch wiederum die Sekundärelektronenemission an den Kondensatorbelegen verhinder wird, und andererseits durch die Übernahme der Ladung von positiven Ionen, welche beim Durchschlag entstehen. Im Durchschlagskanal entstehen durch thermische Zersetzung des Dielektrikums insbesondere Wasserstoff sowie niedermolekulare gesättigte und ungesättigte Kohlenwasserstoffe sowie CO und $CO_2$. Durch die Auswahl der Zusatzstoffe derart, daß sie ein erstes Ionisationspotential besitzen, welches kleiner ist als dasjenige zumindest eines Teiles, vorzugsweise des überwiegenden Teiles der Zersetzungsprodukte, insbesondere kleiner als dasjenige von Wasserstoff, erreicht man, daß die Zusatzmoleküle von den positiven Ionen die Ladung übernehmen. Die polyatomaren Moleküle neutralisieren sich an den Belägen ohne Aussendung von weiteren Photonen.

Die erfindungsgemäßen Zusatzstoffe haben weiterhin den Vorteil, daß auch Bruchstücke der Löschmoleküle der Zusatzstoffe noch eine löschende Wirkung haben; dies ist wesentlich, weil wegen des starken Überdrucks und der hohen Temperatur bei bzw. unmittelbar nach einem Durchschlag im Kondensatordielektrikum die Nachdiffusion von Löschmolekülen zur Durchschlagstelle behindert bzw. unmöglich gemacht ist und in unmittelbarer Umgebung der Durchschlagstelle im wesentlichen nur Bruchstücke der Löschmoleküle vorhanden sind.

Die erfindungsgemäßen Zusatzstoffe werden zweckmäßigerweise so ausgewählt, daß sie mit allen Komponenten des Kondensators gut verträglich sind. Insbesondere dürfen sie die selbstheilend dünnen, aufmetallisierten Metallschichten aus beispielsweise Zink oder Aluminium in Gegenwart der praktisch unvermeidbaren Wasserreste nicht angreifen und die dielektrische Folie, wie z. B. Polypropylen, und sonstige Teile des Kondensators nicht schädigen. Sie sollen außerdem mit niedrigem Wassergehalt in das Kondensatorgehäuse und in den Wickel eingebracht werden und leicht flüchtig sein zur Erzielung der gewünschten Verteilung in den Zwischenräumen zwischen den Kondensatorbelägen. Besonders vorteilhaft ist es, wenn die Zusatzstoffe auch frei sind von Schwefel und Stickstoff, weil derartige Zusatzstoffe in Verbindung mit Wasser, Säuren oder Laugen bilden, welche das Kondensatordielektrikum, die metallischen Beläge, Einbauteile und dgl. schädigen können. Als vorteilhafte Bemessung der Zusatzstoffe hat sich eine Zugabe von 4 bis 8 mg pro $cm^2$ der Oberfläche des Wickels als weckmäßig erwiesen. Für das Einbringen der Zusatzstoffe hat es sich als vorteilhaft erwiesen, wenn diese möglichst unmittelbar vor dem Verschließen des Gehäuses in flüssiger Form zugesetzt werden, weil die leicht fluchtigen Stoffe dann bei der Weiterverarbeitung bis zum Gehäuseverschluß nicht ausdiffundieren.

**Beschreibung der Ausführungsbeispiele**

Die beigegebenen Zusatzstoffe gemäß der Erfindung sollen Ionisationsvorgänge und elektrische Durchschläge in Kondensatorwickeln, insbesondere in Wickeln aus metallisiertem Kunststoff, vorzugsweise metallisiertem Polypropylen weitgehend verhindern. Ihre Verwendung ist insbesondere dann empfehlenswert, wenn die Wickel nicht mit flüssigen oder festen Stoffen imprägniert sind, weil in diesem Fall Ionisationsvorgänge und elektrische Durchschläge, insbesondere Durchschlagsnester, eher auftreten als bei imprägnierten Wickeln. Besonders wichtig ist das Einbringen der Zusatzstoffe in die Hohlräume am Wickelende, wo in verstärktem Maße am Ende des Wickelvorgangs durch nachlassende Wickelspannung und durch das Einlegen von Deckfolien größere Spalte auftreten als im Wickelinneren.

Die Verwendung von mehratomigen organischen Gasen zur Verhinderung von Dauerentladungen ist grundsätzlich bekannt bei selbstlöschenden Geiger-Müller-Zählrohren. Obwohl schon von der Geometrie her in Geiger-Müller-Zählrohren und Kondensatoren verschiedene Bedingungen vorliegen - Abstand der Elektroden im Zählrohr ca. 1 cm, im Kondensator einige µm, war es überraschend, daß diese Stoffe auch bei einem hochenergetischen Vorgang auf kleinstem Raum (Durchschlag) wirksam sind. Im Kondensatorwickel behindern derartige Gase nach elektrischen Durchschlagen die Zündung von benachbarten Folgedurchschlägen, die zu sogenannten Durchschlagsnestern und damit zur Verschlechterung der elektrischen Eigenschaften des Kondensators führen. Vorteilhafte Zusatzstoffe sind insbesondere Toluol und Xylol, insbesondere zusammen mit Polypropylenfolien, jedoch eignen sich auch Benzol, Azeton, Äthylalkohol, Propan, Propylen, Butan und chemisch ähnliche Stoffe. Bei einem Durchschlag im Kondensatorwickel entsteht im Lichbogen eine Wolke aus Elektronen und positiven Ionen sowie energiereiche Strahlung. Insbesondere die UV-Strahlung und die Elektronen zünden benachbarte elektrische Durchschläge, welche durch das vorhandene, Ionen und Elektronen enthaltende Plasma begünstigt werden. Zum Löschen dieser kettenartigen Entladungsvorgänge werden mehratomige, gas- oder dampfformige Kohlenwasserstoffe verwendet. Diese absorbieren ultraviolette Photonen, um hierdurch eine Sekundärelektronenemission an den Kondensatorbelägen zu vermeiden. Die erfindungsgemäßen Zusatstoffe werden bei elastischen Stößen mit Elektronen nicht ionisiert, sondern sie erhalten nur höhere Rotations- und Schwingungsenergien. Außerdem übernehmen die erfindungsgemäßen Zusatzstoffe zumindest von einem Teil der bei einen Durchschlag entstehenden positiven Ionen die Ladung. Zu den Zersetzungsprodukten, welche im Durchschlags kanal durch thermische Zersetzung der dielektrischen Folie und gegebenenfalls des Imprägniermittels entstehen, gehören vor allem Wasserstoff, niedermolekulare gesättigte und ungesättigte Kohlenwasserstoffe sowie CO und $CO_2$. Das erste Ionisationspotential der Zusatzstoffe, d.h. das Ionisationspotential zur Freisetzung des ersten Elektrons, soll kleiner sein als dasjenige zumindest eines Teiles der Zersetzungsprodukte, insbesondere kleiner als 10 bis 11 eV. Hierbei ist berücksichtigt, daß das erste Ionisationspotential insbesondere kleiner sein soll als dasjenige vom Wasserstoff mit 13,5 eV.

Bezüglich der Absorbierung ultravioletter Photonen, d.h. bezüglich der Verhinderung einer Sekundärelektronenemission an den Kondensatorbelägen, ist es wesentlich, daß bei der Neutralisation der Löschgasionen an den Belägen diese Moleküle nur in einen kurzlebigen angeregten Zustand gebracht werden, der nicht zur Aussendung von Photonen sondern zur Dissoziation der Moleküle der Löschgasionen führt.

Als erfindungsgemäße Zusatzstoffe zum Kondensatordielektrikum eignen sich insbesondere mehratomige Kohlenwasserstoff-Verbindungen, die weder Schwefel noch Stickstoff noch Halogene enthalten. Verbindungen, welche diese Stoffe enthalten, haben die Eigenschaft, daß zumindest die erfindungsgemäß wegen ihrer Löschwirkung ebenfalls erforderlichen Bruchstücke derartiger Verbindungen in Gegenwart von unvermeidlichen Wasserresten schädliche Auswirkungen auf Teile des Kondensators, insbesondere auf die Metallschicht haben können.

Bei einem speziellen Ausführungsbeispiel wurden Rundwickel aus 8 µm dicker Polypropylenfolie mit Zn-Belägen hergestellt mit einer Kapazität von 2 µF. Der Wickelabschluß bestand aus 30 Windungen unmetallisierter Polycarbonatfolie, als Verschluß diente eine Gießharzfüllung in einem Kunststoffbecher. Das Einbringen des Zusatzstoffes erfolgte unmittelbar vor dem Vergießen durch oberflächliche Benetzung mit Toluol in einer Menge von 6 mg/cm², bezogen auf die Oberfläche des Wickels. Nach einer vergleichenden Dauerspannungsprüfung von erfindungsgemäßen und herkömmlichen Kondensatoren ist festgestellt worden, daß die mit Toluol benetzten Wickel einen mittleren Kapazitätsverlust von nur 0,5 % aufwiesen, während die Gruppe der herkömmlichen Kondensatoren einen Kapazitätsverlust von 3,5 % besaßen. Bei anschließender Überprüfung einiger der erfindungsgemäßen Wickel sind hierin erheblich weniger elektrische Durchschläge und keine Durchschlagnester gefunden worden.

Das Einbringen der Zusatzstoffe in den aktiven Bereich des Wickels soll nach Möglichkeit unmittelbar vor dem Verschließen des Gehäuses oder dgl. erfolgen, und zwar vorzugsweise durch Einbringen einer definierten Menge des flüssigen Zusatzstoffes in das Kondensatorgehäuse oder gegebenenfalls durch Einbringen mit dem flüssigen oder festen Kondensatorfüllmittel oder Kondensatorimprägniermittel, in dem die Zusatzstoffe zuvor verteilt worden sind. Die Löschgasmoleküle diffundieren hierbei und anschließend in den aktiven Bereich des Wickels. Als Füllmittel dienen insbesondere Gießharze oder Füllöle oder Mischungen aus beiden.

Weiterhin besteht zum Einbringen der erfindungsgemäßen Zusatzstoffe auch die Möglichkeit, die äußere Wickeloberfläche mit dem flüssigen Zusatzstoff zu benetzen oder den Wickel in der Dampfphase mit den Löschgas imprägnieren. Diese beiden letztgenannten Möglichkeiten müssen jedoch unmittelbar vor dem Verschließen des Gehäuses wahrgenommen werden unter Berücksichtigung eines gewissen Löschgas-Überschusses, weil die Zusatzstoffe leicht flüchtig sind und gegebenenfalls nicht in ausreichender Menge im Gehäuse verbleiben. Auch bei den vorher genannten Möglichkeiten zum Einbringen der Zusatzstoffe kann ein Überschuß vorteilhaft sein um Ausgleich von Diffusionsverlusten. Hierbei sei erwähnt, daß übliche Reste von Lösungsmitteln von Isolier- oder Deckfolien, deren Dämpfe als Löschgas wirken und die sich eventuell in Stoffen innerhalb des Kondensators befinden, als erfindungsgemäße Zusatzstoffe nicht ausreichen, um die angestrebte Wirkung zu erzielen.

Durch das Einbringen der erfindungsgemäßen Zusatzstoffe (Löschgase) in die Zwischenräume des Kondensatorwickels, insbesondere am Wickelende, wird der Kapazitätsverlust als Folge von Durchschlagnestern wesentlich verringert. Dieser Erfolg ist dadurch bedingt, daß durch die Löschgase die Zündung von Folgedurchschlägen in der Nachbarschaft eines einmal aufgetretenen Durchschlages im Kondensatordielektrikum behindert wird.

**Patentansprüche**

1. Elektrischer Kondensator, vorzugsweise nichtimprägnierter selbstheilender elektrischer Kondensator, mit einem Wickel mit Dielektrikumsfolien aus Papier und/oder Kunststoff und mit metallischen Belägen, welche vorzugsweise im Vakuum auf die Dielektrikumsfolien aufgedampft sind, mit einen den Wickel umschließenden Gehäuse, Verguß oder dgl., und mit einem gas- oder dampfförmigen Zusatzstoff aus mehratomigen Kohlenwasserstoffverbindungen in den Zwischenräumen zwischen den metallischen Belägen, dadurch gekennzeichnet, daß die Zusatzstoffe frei sind von Halogenen und ein erstes Ionisationspotential besitzen, welches kleiner is als dasjenige zumindest eines Teils, vorzugsweise des überwiegenden Teils der Zersetzungprodukte des Kondensatordielektrikums, insbesondere kleiner als 10 bis 11 eV.

2. Kondensator nach Anspruch 1, dadurch gekennzeichnet, daß die Zusatzstoffe frei sind von Schwefel.

3. Kondensator nach Anspruch 1 oder 2, dadurch gekennzeichnet, daß die Zusatzstoffe frei sind von Stickstoff.

4. Kondensator nach einem der vorhergehenden Ansprüche, dadurch gekennzeichnet, daß die Zusatzstoffe in einer Menge von wenigstens 4 mg/cm$^2$, vorzugsweise von 4 bis 8 mg/cm$^2$ der Wickeloberfläche beigegeben sind.

5. Kondensator nach einem der vorhergehenden Ansprüche, dadurch gekennzeichnet, daß als Zusatzstoffe wenigstens einer der Stoffe Toluol, Xylol, Benzol, Azeton, Äthylalkohol, Propan, Propylen und/oder Butan beigegeben ist.

6. Kondensator nach einem der Ansprüche 1 bis 4, dadurch gekennzeichnet, daß als Zusatzstoff zu einem Polypropylendielektrikum Toluol oder Xylol beigegeben ist.

7. Kondensator nach einem der vorhergehenden Ansprüche, dadurch gekennzeichnet, daß die Zusatzstoffe in flüssiger Form vor dem Verschließen des Gehäuses oder dgl. eingebracht sind.

8. Kondensator nach Anspruch 7, dadurch gekennzeichnet, daß die Zusatzstoffe durch Benetzung der äußeren Wickeloberfläche unmittelbar vor dem Einbau ins Gehäuse eingebracht werden.

9. Kondensator nach einem der Ansprüche 1 bis 6, dadurch gekennzeichnet, daß die Zusatzstoffe in einem flüssigen oder festen Kondensatorfüllmittel, vorzugsweise in Füllöl oder Gießharz oder Mischungen aus beiden, verteilt sind und daraus in die Zwischenräume eindiffundieren.

10. Kondensator nach einem der Ansprüche 1 bis 6, dadurch gekennzeichnet, daß die Zusatzstoffe in einem Kondensatorimprägniermittel verteilt sind.

**Claims**

1. Electrical capacitor, preferably a non-impregnating, self-healing, electrical capacitor, with a coil with dielectric films of paper and/or plastic and with metallic foils, which are preferably vapour-deposited under vacuum onto the dielectric films, with a housing, casting or the like enclosing the coil, and with a gaseous or vapourous additive of polyatomic hydrocarbon compounds in the intermediate spaces between the metallic foils, characterized in that the additives are free from halogens and have a first ionization potential which is smaller than that of at least part, preferably the predominant part, of the decomposition products of the capacitor dielectric, in particular smaller than 10 to 11 eV.

2. Capacitor according to claim 1, characterized in that the additives are free from sulphur.

3. Capacitor according to claim 1 or 2, characterized in that the additives are free from nitrogen.

4. Capacitor according to one of the preceding claims, characterized in that the additives are added in an amount of at least 4 mg/cm$^2$, preferably from 4 to 8 mg/cm$^2$ of the coil surface.

5. Capacitor according to one of the preceding claims, characterized in that at least one of the substances toluene, xylene, benzene, acetone, ethyl alcohol, propane, propylene and/or butane are added as additives.

6. Capacitor according to one of claims 1 to 4, characterized in that toluene or xylene is added as additive to a polypropylene dielectric.

7. Capacitor according to one of the preceding claims, characterized in that the additives are introduced in liquid form before closing of the housing or the like.

8. Capacitor according to claim 7, characterized in that the additives are introduced by wetting of the outer coil surface immediately before fitting into the housing.

9. Capacitor according to one of claims 1 to 6, characterized in that the additives are distributed in a liquid or solid capacitor filling agent, preferably in falling oil or casting resin or mixtures of the two, and diffused out of it into the intermediate spaces.

10. Capacitor according to one of claims 1 to 6, characterized in that the additives are distributed in a capacitor impregnating agent.

**Revendications**

1. Condensateur électrique, de préférence condensateur électrique autoréparateur non imprégné, avec un bobinage de feuilles diélectriques en papier et/ou matière plastique et avec des revêtements métalliques qui sont vaporisés de préférence sous vide sur les feuilles de diélectrique, avec un boîtier entourant le bobinage, un scellement en masse ou analogue, et avec un additif sous forme gazeuse ou vapeur de composés d'hydrocarbures à plusieurs atomes dans les espaces intermédiaires entre les revêtements métalliques, caractérisé en ce que les additifs sont exempts d'halogènes et possèdent un premier potentiel d'ionisation qui est inférieur à celui d'au moins une partie, de préférence la partie prépondérante des produits de décomposition du diélectrique de condensateur, notamment inférieur à 10 - 11 eV.

2. Condensateur selon la revendication 1, caractérisé en ce que les additifs sont exempts de soufre.

3. Condensateur selon la revendication 1 ou 2, caractérisé en ce que les additifs sont exempts d'azote.

4. Condensateur selon l'une des revendications précédentes, caractérisé en ce que les additifs sont ajoutés à raison d'au moins 4 mg/cm$^2$, de préférence de 4 à 8 mg/cm$^2$ de surface de bobinage.

5. Condensateur selon l'une des revendications précédentes, caractérisé en ce qu'on ajoute comme additif au moins l'un des produits toluène, xylene, benzène, acétone, éthanol, propane, propylène et/ou butane.

6. Condensateur selon l'une des revendications 1 à 4, caractérisé en ce que l'additif qu'on ajoute à un diélectrique de polypropylène est du toluène ou du xylène.

7. Condensateur selon l'une des revendications précédentes, caractérisé en ce que les additifs sont ajoutés sous forme liquide avant le scellage du boîtier ou analogue.

8. Condensateur selon la revendication 7, caractérisé en ce que les additifs sont introduits par mouillage de la surface externe du bobinage immédiatement avant l'implantation dans le boîtier.

9. Condensateur selon l'une des revendications 1 à 6, caractérisé en ce que les additifs sont dispersés dans un milieu de remplissage de condensateur liquide ou solide, de préférence dans de l'huile de remplissage ou une résine coulée ou des mélanges des deux, et depuis ces produits diffusent dans les espaces intermédiaires.

10. Condensateur selon l'une des revendications 1 à 6, caractérisé en ce que les additifs sont dispersés dans un milieu d'imprégnation de condensateur.